# FASCICULE DE BREVET EUROPEEN

(11) **EP 2 170 705 B1**
(45) Date de publication et mention de la délivrance du brevet: **24.10.2012**
(21) Numéro de dépôt: 08806111.4
(22) Date de dépôt: 27.06.2008
(51) Int. Cl.: B64F 5/00

(54) **PROCEDE DE MAINTENANCE D'UN RESERVOIR D'AERONEF**
VERFAHREN ZUR WARTUNG EINES FLUGZEUGTANKS
METHOD FOR MAINTENANCE OF AIRCRAFT TANK

(30) Priorité: 29.06.2007 FR 0756137
(43) Date de publication de la demande: 07.04.2010
(73) Titulaire: Sunaero-Helitest, 69726 Genay (FR)
(72) Inventeur: DUMORTIER, Laurent, F-33760 Targon (FR)
(74) Mandataire: Fantin, Laurent
(86) Numéro de dépôt international: PCT/FR2008/051183
(87) Numéro de publication internationale: WO 2009/007614

(56) Documents cités:
- JP-A- 57 194 329
- JP-A- 59 176 640
- US-A- 4 696 186
- US-A1- 2003 230 673
- US-A1- 2005 126 264
- US-B1- 6 886 389

## Description

La présente invention est relative à un procédé de maintenance d'un réservoir d'aéronef, notamment un procédé particulièrement adapté pour détecter et localiser rapidement une fuite de carburant dans un réservoir d'aéronef.

La détection et la localisation d'une fuite issue d'un réservoir d'aéronef nécessitent une bonne connaissance de la structure de l'aéronef. Autant depuis l'extérieur que depuis l'intérieur de l'aéronef, certaines méthodes actuelles de détection et de localisation de fuite nécessitent autant d'habileté que les opérations de réparation desdits réservoirs, voir le document US6886389.

Certains réservoirs d'aéronef peuvent se présenter sous la forme d'une vessie souple en caoutchouc, néoprène, Viton® ou autre, disposée dans une cavité de la structure de l'aéronef ou d'une partie de l'aéronef, à l'intérieur des ailes ou dans la soute par exemple.

Afin d'évacuer les éventuels écoulements de fuite, la structure contenant ledit réservoir souple est généralement munie d'au moins un tube de drainage. Ladite structure comprend aussi une prise d'air pour compenser la consommation et la diminution de volume de la vessie.

De cette manière, lorsqu'une fuite de carburant apparaît au niveau de la vessie, l'écoulement circule dans l'espace interstitiel situé entre ladite vessie et la structure jusqu'au niveau de la sortie du tube de drainage, où ledit écoulement de fuite est facilement repérable.

Si la fuite est détectée, il demeure très difficile de la localiser et d'effectuer les réparations nécessaires sans extraire la vessie de la structure de l'aéronef. Actuellement, afin de réparer une vessie souple d'un réservoir d'aéronef, il faut extraire complètement ladite vessie de la structure de l'aéronef. Cette extraction complète nécessite un démontage et un remontage de l'ensemble des connexions internes avec la vessie, plus d'une centaine parfois sur certains réservoirs. En effet, la vessie comprend de nombreuses connexions fluides et de nombreuses connexions mécaniques afin d'être maintenue en place. Il s'agit donc d'opérations longues et fastidieuses entamant la disponibilité opérationnelle de l'aéronef et augmentant considérablement le coût des opérations de maintenance.

De plus, lors de son extraction ou de sa remise en place dans la structure de l'aéronef, ladite vessie souple subit des contraintes mécaniques susceptibles de la détériorer. Fréquemment, la simple extraction de la vessie l'endommage et il est nécessaire de la remplacer par une neuve, ce qui conduit à des coûts de maintenance encore plus élevés.

Aujourd'hui encore, lorsqu'une fuite est détectée au niveau d'un réservoir à vessie souple lors des grandes maintenances, ladite vessie est démontée et la localisation de la fuite est réalisée à l'ammoniac avec révélateur extérieur à la phénophtaléine, ce qui pose de sérieux problèmes de sécurité et de santé.

La présente invention se propose donc de répondre aux inconvénients des procédés de l'art antérieur en proposant un procédé de maintenance d'un réservoir d'aéronef permettant la détection, la localisation et la réparation d'une fuite sans extraction de la vessie souple de la structure de l'aéronef et sans utilisation de produits susceptibles d'être dangereux pour la sécurité ou la santé du technicien de maintenance.

Un autre objectif de l'invention est de préserver au maximum la disponibilité opérationnelle d'un aéronef en assurant une détection et une localisation précises et rapides d'une fuite dans un réservoir afin de permettre une réparation de la vessie in situ fiable et durable.

A cet effet, l'invention a pour objet un procédé de maintenance selon la revendication 1.

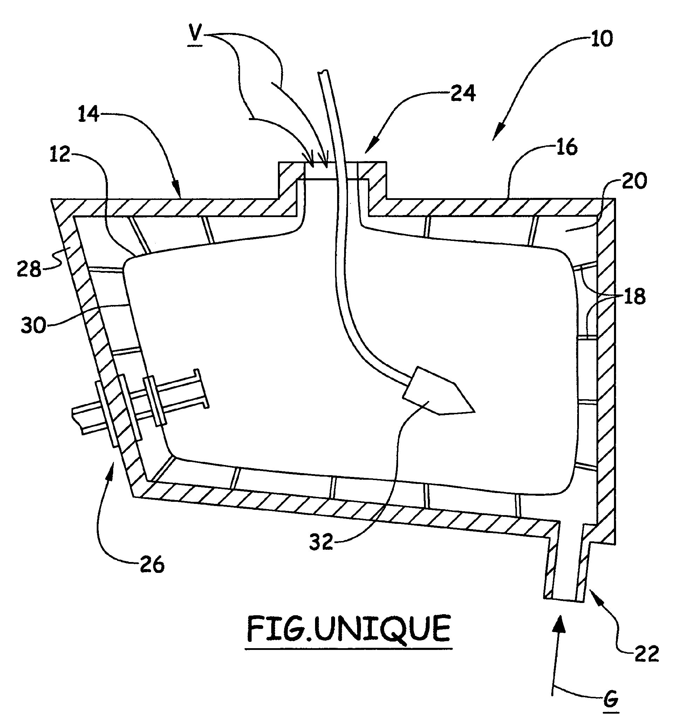

D'autres caractéristiques et avantages ressortiront de la description qui va suivre de l'invention, description donnée à titre d'exemple uniquement, en regard de la figure unique qui est une représentation schématique d'une coupe transversale au niveau d'un réservoir d'aéronef.

Sur cette figure unique, on a représenté un réservoir 10 d'aéronef comprenant une vessie 12 souple logée dans une chambre 14 ménagée dans la structure 16 dudit aéronef.

Ladite vessie 12 souple est maintenue dans la chambre 14 par plusieurs connexions 18 la reliant à la structure 16 de l'aéronef, un espace interstitiel 20 étant prévu entre ladite vessie et ladite chambre avec au moins une prise de drainage 22 permettant d'évacuer les éventuels écoulements de fuite.

L'espace interstitiel 20 forme un volume sensiblement fermé dont l'étanchéité dépend principalement de l'étanchéité de la structure 16 de l'aéronef formant la chambre 14 de logement de la vessie 12.

Une chambre 14 peut se situer dans différentes parties de la structure 16 de l'aéronef, comme par exemple à l'intérieur d'une aile ou d'une soute, et elle comprend au moins une ouverture d'accès 24 pour la réalisation de différents contrôles et réparations, notamment lors des opérations de maintenance.

En plus des connexions 18 maintenant la vessie 12 souple, d'autres dispositifs sont susceptibles d'être interposés entre ladite vessie souple et la structure 16 de l'aéronef, c'est notamment le cas des éléments permettant de raccorder des tuyauteries ou différents capteurs au réservoir de carburant.

Sur la figure unique, on a représenté un raccord 26 traversant une paroi 28 de la chambre, soit une partie de la structure 16 de l'aéronef, ainsi qu'une paroi 30 de la vessie 12 souple. Bien que disposant de moyens d'étanchéité au niveau de chaque paroi traversée, un raccord 26, comme tout autre dispositif traversant une paroi 30 de la vessie souple, est un élément susceptible de favoriser l'apparition de fuites.

Le procédé de maintenance d'un réservoir d'aéronef selon l'invention va maintenant être décrit selon un mode de réalisation préféré.

Afin de permettre la détection, la localisation et la réparation d'au moins une fuite sans extraction de la vessie 12 souple de la structure 16 de l'aéronef, le procédé de maintenance selon l'invention met en oeuvre les étapes suivantes :
- injection d'un gaz traceur à une pression P dans l'espace interstitiel 20 entre la chambre 14 et la vessie 12,
- déplacement d'une sonde 32 de détection dudit gaz traceur à l'intérieur de ladite vessie,
- localisation du point de fuite en cas de détection d'un flux de gaz traceur.

Comme illustré par la flèche G, l'injection du gaz traceur est de préférence effectuée par la prise de drainage 22 donnant accès à l'espace interstitiel entre la chambre 14 et la vessie 12. La sonde est introduite dans la vessie souple par l'ouverture d'accès 24 afin d'être déplacée à l'intérieur de ladite vessie, cette ouverture étant obturée pendant le contrôle.

Par gaz traceur, on entend un gaz seul ou un mélange air gaz.

Différents moyens connus de l'homme du métier peuvent aussi être utilisés pour aider le technicien de maintenance à pouvoir sonder les différentes parties des parois internes de la vessie, même les plus difficiles d'accès.

De préférence, le gaz traceur utilisé dans l'invention est de l'hélium. Ce gaz possède plusieurs avantages : sa molécule est la plus petite parmi celles des autres gaz nobles, ce qui autorise la détection des plus petites fuites, et c'est un gaz ininflammable, non toxique et totalement inerte.

Grâce à l'utilisation de l'hélium, le procédé de maintenance selon l'invention n'est pas dangereux, vis-à-vis de la sécurité ou la santé du technicien de maintenance. Comme illustré par les flèches V sur la figure, le procédé prévoit avantageusement de ventiler l'intérieur de la vessie 12 durant l'utilisation de la sonde 32 de détection afin d'éviter que les molécules de gaz traceur ayant pénétré dans la vessie 12 par une ou plusieurs fuites ne viennent perturber la localisation de la ou desdites fuites en s'accumulant dans la vessie.

Dans le cas où la structure 16 dans laquelle est ménagée la chambre 14 de la vessie 12 souple est sensiblement étanche, le procédé prévoit d'introduire le gaz traceur à une pression très faible dans l'espace interstitiel 20 et de la maintenir. Pour donner un ordre d'idées, le procédé selon l'invention prévoit de maintenir le gaz traceur à une pression comprise entre 30 et 50 mbars dans l'espace interstitiel 20. De cette manière, en cas de fuite au niveau de la vessie 12, le gaz traceur va migrer à l'intérieur de ladite vessie.

Selon l'invention dans le cas où la structure 16 dans laquelle est ménagée la chambre 14 de la vessie 12 souple n'est pas suffisamment étanche, le procédé prévoit de saturer l'espace interstitiel 20 avec le gaz traceur et de créer une mise sous vide à proximité de la sonde de détection. De cette manière, en cas de fuite au niveau de la vessie 12, la pression différentielle entre l'espace interstitiel 20 et l'intérieur de la vessie 12 provoque une migration d'au moins quelques molécules de gaz traceur lorsque la sonde 32 de détection passe à proximité d'une fuite.

Dans un mode de réalisation préféré, le procédé de maintenance selon l'invention prévoit l'utilisation d'une sonde 32 de détection intégrant des moyens de mise sous vide.

On constate donc que le procédé de détection et de localisation d'au moins une fuite qui vient d'être décrit permet au procédé de maintenance selon l'invention de localiser directement la fuite dans le réservoir de l'aéronef sans démontage de la vessie 12 souple. Avantageusement par rapport aux procédés de l'art antérieur, ledit procédé de maintenance peut être mené en quelques heures seulement, ce qui a un impact important sur la disponibilité de l'aéronef.

Par la suite, en cas de détection et de localisation d'une ou plusieurs fuites, le procédé de maintenance consiste à assurer une réparation in situ, c'est à dire intra réservoir, par pose d'un patch à chaud. Selon l'invention, la pose d'un patch à chaud consiste en une polymérisation à chaud de ladite réparation réalisée à l'aide d'un moyen de chauffage par rayonnement. De préférence, ladite polymérisation à chaud est réalisée grâce à un moyen de chauffage par rayonnement infrarouge à large spectre d'émission à travers une poche à vide. La pose d'un patch à chaud intra réservoir permet de qualifier le procédé selon l'invention comme un procédé de maintenance à réparation permanente améliorant la disponibilité opérationnelle de l'aéronef. Ledit procédé est ainsi beaucoup plus avantageux que les procédés de maintenance de l'art antérieur prévoyant une réparation temporaire par pose d'un patch à froid sans polymérisation, ladite réparation temporaire nécessitant un temps de séchage de 24 à 48 heures durant lequel l'aéronef est indisponible ainsi qu'une reprise lors des grandes maintenances après extraction de la vessie.

Afin de finaliser la réparation et d'assurer la fiabilité de la réparation par pose d'un ou plusieurs patch à chaud, le procédé selon l'invention prévoit un contrôle étanchéité dit « sec » de la vessie 12 du réservoir. Ainsi, après réparation, le procédé de maintenance selon l'invention consiste à vérifier ladite réparation en mettant en oeuvre les étapes suivantes :
- injection d'un gaz traceur à une pression P dans la vessie 12,
- disposition de la sonde 32 au niveau de la prise de drainage 22,
- mesure d'un éventuel flux de gaz traceur supérieur à celui de la porosité de la vessie.

Plus précisément, la vérification selon l'invention consiste à porter le gaz traceur à une légère surpression à l'intérieur de la vessie 12 venant d'être réparée et à contrôler par prélèvement et analyse à la sortie de la prise de drainage 22. Une perméabilité de la vessie 12 crée un bruit de fond dans le signal détecté par la sonde 32 mais il est inférieur d'environ une décade par rapport au phénomène d'émission de gaz traceur lié à une fuite de la vessie. La vérification prévue par le procédé de maintenance est donc parfaitement adaptée pour la réalisation d'un test global d'étanchéité d'un réservoir 10 d'aéronef.

Généralement, notamment sur les aéronefs de combat, l'espace disponible dans la structure de l'aéronef est utilisé au maximum et par conséquent, l'accessibilité à l'intérieur de la structure de l'aéronef est limitée aux composants nécessitant une maintenance régulière. En permettant une réparation in situ d'un réservoir, le procédé selon l'invention est susceptible de permettre une simplification de la conception de la structure de l'aéronef au niveau de la ou des chambres ménagée pour recevoir une vessie de réservoir par limitation du nombre d'accès nécessaires pour la maintenance de l'aéronef.

Bien entendu, l'invention couvre aussi tous les procédés de maintenance ne comprenant que les étapes de détection et de localisation d'une ou plusieurs fuites, ou de contrôle étanchéité à sec ou de réparation in situ par pose d'un patch à chaud, telles qu'elles sont prévues dans le procédé de maintenance selon l'invention.

L'invention couvre aussi l'application du présent procédé de maintenance à d'autres réservoirs ou dispositifs comprenant une vessie souple logée dans un volume assimilable à une chambre, ou à d'autres détections de fuite, comme par exemple dans les circuits d'alimentation en oxygéne du cockpit ou de la zone passager de l'aéronef.

## Revendications

1. Procédé de maintenance d'un réservoir (10) d'aéronef comprenant une vessie (12) souple logée dans une chambre (14) ménagée dans la structure (16) dudit aéronef, un espace interstitiel (20) étant prévu entre ladite vessie et ladite chambre avec au moins une prise de drainage (22), un gaz traceur étant injecté à une pression P dans l'espace interstitiel (20) entre la chambre (14) et la vessie (12), **caractérisé en ce qu'**il consiste à détecter et localiser au moins une fuite en mettant en oeuvre les étapes suivantes :
- saturation de l'espace interstitiel (20) avec le gaz traceur,
- déplacement d'une sonde (32) de détection dudit gaz traceur à l'intérieur de la vessie (12) avec génération d'une sensible mise sous vide à proximité de la sonde (32) de détection, pour créer une pression différentielle entre l'espace interstitiel (20) et l'interieur de la vessie (12),
- localisation du point de fuite en cas de détection d'un flux de gaz traceur.

2. Procédé de maintenance d'un réservoir (10) d'aéronef selon la revendication 1, **caractérisé en ce que** le gaz traceur utilisé est de l'hélium.

3. Procédé de maintenance d'un réservoir (10) d'aéronef selon la revendication 1 ou 2, **caractérisé en ce que** le réservoir (10) est ventilé durant ledit procédé.

4. Procédé de maintenance d'un réservoir (10) d'aéronef selon l'une des revendications 1 à 3, **caractérisé en ce que**, en cas de fuite détectée, ledit procédé consiste à assurer une réparation in situ, c'est-à-dire intra réservoir, par pose d'un patch à chaud à l'aide d'un moyen de chauffage par rayonnement.

5. Procédé de maintenance d'un réservoir (10) d'aéronef selon la revendication 4, **caractérisé en ce que** la pose d'un patch à chaud consiste en une polymérisation à chaud de ladite réparation à l'aide d'un moyen de chauffage par rayonnement infrarouge à large spectre d'émission.

6. Procédé de maintenance d'un réservoir (10) d'aéronef selon la revendication 4 ou 5, **caractérisé en ce que**, après réparation, ledit procédé consiste à vérifier ladite réparation en mettant en oeuvre les étapes suivantes :
- injection d'un gaz traceur à une pression P dans la vessie,
- disposition de la sonde de détection au niveau de la prise de drainage,
- mesure d'un éventuel flux de gaz traceur supérieur à celui de la porosité de la vessie.

## Claims

1. A method of maintaining an aircraft tank (10) comprising a flexible bladder (12) housed in a chamber (14) formed in the structure (16) of said aircraft, an interstitial space (20) being provided between said bladder and said chamber with at least one drainage tapping (22), a tracer gas being injected at a pressure P into the interstitial space (20) between the chamber (14) and the bladder (12), **characterised in that** it comprises detecting and locating at least one leak using the following steps:
- saturation of the interstitial space (20) with tracer gas,
- movement of a sensor (32) for detecting said tracer gas inside the bladder (12) with the generation of a substantial vacuum close to the detection sensor (32), in order to create a differential pressure between the interstitial space (20) and the interior of the bladder (12),
- location of the leakage point in the event of detection of a tracer gas flow.

2. A method of maintaining an aircraft tank (10) according to claim 1, **characterised in that** the tracer gas used is helium.

3. A method of maintaining an aircraft tank (10) according to claim 1 or 2, **characterised in that** the tank (10) is ventilated during said method.

4. A method of maintaining an aircraft tank (10) according to one of claims 1 to 3, **characterised in that**, in the event of a detected leak, said method comprises providing a repair in situ, that is to say intra-tank, by placing a patch hot using a radiation heating means.

5. A method of maintaining an aircraft reservoir (10) according to claim 4, **characterised in that** the placing of a patch hot comprises a hot polymerisation of said repair using an infrared radiation heating means with a broad emission spectrum.

6. A method of maintaining an aircraft tank (10) according to claim 4 or 5, **characterised in that**, after repair, said method comprises checking said repair using the following steps:
- injection of a tracer gas at a pressure P in the bladder,
- arranging the detection sensor at the drainage tapping,
- measuring any tracer gas flow greater than that of the porosity of the bladder.

## Patentansprüche

1. Verfahren zur Wartung eines Flugzeugtanks (10) mit einer weichen Blase, die sich in einer in der Struktur (16) des Flugzeugs ausgebildeten Kammer (14) befindet, wobei zwischen der Blase und der Kammer ein Zwischenraum (20) mit wenigstens einem Drainageablauf (22) ausgebildet ist, und wobei ein Nachweisgas mit einem Druck (P) in den Zwischenraum (20) zwischen der Kammer (14) und der Blase (12) eingeleitet wird, **dadurch gekennzeichnet, dass** das Verfahren in der Detektion und in der Lokalisierung von wenigstens einem Leck durch Ausführen der folgenden Verfahrensschritte besteht:
- Sättigung des Zwischenraums (20) mit dem Nachweisgas,
- Bewegen einer Sonde (32) für die Detektion des Nachweisgases im Inneren der Blase (12) mit Erzeugen eines deutlichen Unterdrucks in der Nähe der Sonde (32) für die Detektion, um einen Druckunterschied zwischen dem Zwischenraum (20) und dem Inneren der Blase (12) zu erzeugen,
- Lokalisierung der Leckstelle im Fall der Detektion eines Nachweisgasflusses.

2. Verfahren zur Wartung eines Flugzeugtanks (10) nach Anspruch 1, **dadurch gekennzeichnet, dass** das verwendete Nachweisgas Helium ist.

3. Verfahren zur Wartung eines Flugzeugtanks (10) nach Anspruch 1 oder 2, **dadurch gekennzeichnet, dass** der Tank (10) während des Verfahrens belüftet wird.

4. Verfahren zur Wartung eines Flugzeugtanks (10) nach einem der Ansprüche 1 bis 3, **dadurch gekennzeichnet, dass** das Verfahren im Fall eines detektierten Lecks im Gewährleisten einer In-Situ-Reparatur, d.h. innerhalb des Tanks, durch Setzen einer warmen Abdichtung mit Hilfe eines Strahlungsheizmittels besteht.

5. Verfahren zur Wartung eines Flugzeugtanks (10) nach Anspruch 4, **dadurch gekennzeichnet, dass** das Setzen einer warmen Abdichtung in einer warmen Polymerisation der Reparatur mit Hilfe eines infraroten Strahlungsheizmittels mit breiten Emissionsspektrum besteht.

6. Verfahren zur Wartung eines Flugzeugtanks (10) nach Anspruch 4 oder 5, **dadurch gekennzeichnet, dass** nach der Reparatur das Verfahren in der Überprüfung der Reparatur durch Ausführen der folgenden Verfahrensschritte besteht:
- Einleiten eines Nachweisgases mit Druck P in die Blase,
- Anordnen der Sonde für die Detektion im Bereich des Drainageablaufs,
- Messen eines eventuellen Nachweisgasflusses, der größer als derjenige aufgrund der Porosität der Blase ist.
